# EUROPEAN PATENT SPECIFICATION

(11) **EP 1 391 083 B1**
(45) Date of publication and mention of the grant of the patent: **19.03.2008**
(21) Application number: 02730280.1
(22) Date of filing: 24.05.2002
(51) Int. Cl.: H04L 12/28

(54) **MOBILE COMMUNICATION NETWORK**
MOBILES KOMMUNIKATIONSNETZ
RESEAU MOBILE DE TELECOMMUNICATIONS

(30) Priority: 25.05.2001 IT TO20010496
(43) Date of publication of application: 25.02.2004
(73) Proprietor: Telecom Italia S.p.A., 20123 Milano (IT)
(72) Inventor: GREGO, Giorgio c/O Telecom Italia S.p.A., I-10148 Torino (IT)
(74) Representative: Appelt, Christian W.
(86) International application number: PCT/EP2002/005761
(87) International publication number: WO 2002/096032

(56) References cited:
- EP-A- 1 207 708
- WO-A-00/69186
- WO-A-92/12579
- WO-A-97/42785
- NOERPEL A R ET AL: "SUPPORTING PACS ON A GSM MSC" IEEE COMMUNICATIONS MAGAZINE, IEEE SERVICE CENTER. PISCATAWAY, N.J, US, vol. 34, no. 9, 1 September 1996 (1996-09-01), pages 114-123, XP000627244 ISSN: 0163-6804
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

The invention relates to mobile communication networks and particularly refers to a mobile communication network according to the preamble of claim 1.

Mobile communication networks of the type specified above, currently called "cellular" networks, are well known in the art and have reached a very wide and capillary diffusion over the past years.

One of the most characterising aspects of these networks is that the maximum number of mobile terminals which can connect simultaneously to a certain base transceiver station is limited by technological factors such as, for example, the maximum number of frequencies, or codes, which can be used within a cell without reuse and/or the risk of possible interference with neighbouring cells. In other words (regardless of the nature of said limitations, related to the techniques adopted for establishing communication between mobile terminals and base transceiver stations), there is a maximum number of available "channels" for communication between the mobile terminals and the base transceiver station (or base transceiver stations) in whose pertaining area the mobile terminals are at that time: the word "channel" is deliberately used according to its widest and most generic meaning.

In practice, a mobile terminal attempting to connect to the network to make a call (or, symmetrically, a mobile terminal to which an attempt is made to direct the call) cannot communicate when all the channels are engaged.

It being understood that the network characteristics can be adapted to suit traffic requirements (e.g. by employing smaller cells and/or cells with higher availability of channels in areas where traffic is most intense, e.g. in major urban areas), there are various application scenarios in which the traffic may present very significant variations in time.

For example, at places such as shopping centres, airports, railway stations, bus stops, underground train stations, etc., the traffic to be dealt with may present a typical wave or "peak" pattern. Take the example of an airport in which peaks of calls can more than reasonably be expected immediately after the arrival of single flights with more or less prolonged periods in which the traffic to be dealt with is more modest.

An extreme case is that of stadiums or other sports and show venues and facilities. For example, a considerable mass of people (even tens of thousands, with their corresponding telephone traffic needs) may crowd a stadium for a short period of time (e.g. for a few hours or a little longer) for an event. The venue may then remain practically deserted for days, and even weeks, until the following event is organised.

Dimensioning and configuring a mobile communication network to satisfactorily deal with the needs of traffic peaks which occur for only two or three hours a week (and even less frequently) is anything but an efficient solution as regards the general network economy.

The object of the invention is to provide a solution capable of overcoming this problem.

According to the invention, this object is achieved thanks to a mobile communication network having the characteristics specifically reported in the annexed claims.

Particularly, the solution according to the invention is based on the application of the technology currently known as Bluetooth^{®}.

The salient aspects of this communication technology are entirely known in the art, even as concerns the formation and management of the "piconet" and "scatternet" networks and the respective implemented profiles. With regards to this, useful reference can be made to the web site www.bluetooth.com. Further reference is made to "Specification of the Bluetooth System", Version 1.1, 22-02-2001, a publication comprising two volumes "Core" and "Profiles".

For technological background purposes, reference can also be made, for example, to paper WO-A-0 069 186 that describes the creation of a cellular radio communication system from a set of local radio piconet networks implementing Bluetooth technology

This technology can be used to connect equipment at a maximum distance of 100 m, at a bit-rate that can reach 720 kbps for data and with the possibility of generating a maximum number of three simultaneous audio channels.

Up to eight simultaneous users can be managed by each master unit (including the master). Up to 256 units can be held in stand-by conditions, offering the terminals the possibility to communicate with the master unit according to the availability of resources (typically because the communication with one of the seven slave units which were previously connected to the master unit fails).

The related implementation costs are not excessive. Today, there are mobile telephone terminals that are either configured or set-up for using Bluetooth technology on local communication level.

Networking aspects of the Bluetooth technology, describing piconets and scatternets, can be found in the paper "Bluetooth - The universal radio interface for ad hoc, wireless connectivity" by Haartsen J., ERICSSON REVIEW, ERICSSON, STOCKHOLM, SE, no.3, 1998, pages 110-117.

Document WO 97/42785 discloses a process for integrating cordless telephone networks into cellular mobile phone networks by using dual-system terminals which support communication over both a cordless telephone network and a mobile phone network. In the process, the mobile phone network assigns each cordless telephone network usable by a specific subscriber an own Location Area, to which a subscriber specific call number is allocated. A continuous check is made whether the subscriber is in the Location Area of the cordless telephone network available to him, and if so, then any call incoming via the mobile phone network is completed optionally or automatically by a mobile phone switching centre using, the call number assigned to the Location Area.

Essentially, the solution according to the invention is based on the possibility of establishing a communication between each terminal and the respective base transceiver station of the mobile network (possibility based on the use of GSM, GPRS or UMTS channels) with an additional possibility of connection offered by a radio link implementing Bluetooth technology and exploiting the ISM 2.4 GHz bandwidth.

As mentioned, terminals either configured or set-up for communicating with Bluetooth technology already exist today The solution according to the invention consists in integrating this availability - already available or implemented on mobile terminal level - with a symmetric availability of communication via Bluetooth technology for the cellular network base transceiver station **(BTS).**

The invention will now be described, by way of example only, with reference to the following drawings wherein:
- figure 1 shows a typical mobile communication network configuration according to the known art in the form of a functional block chart, and
- figure 2 illustrates the criteria that can be used to implement the invention in the context of a network of the type illustrated in figure 1.

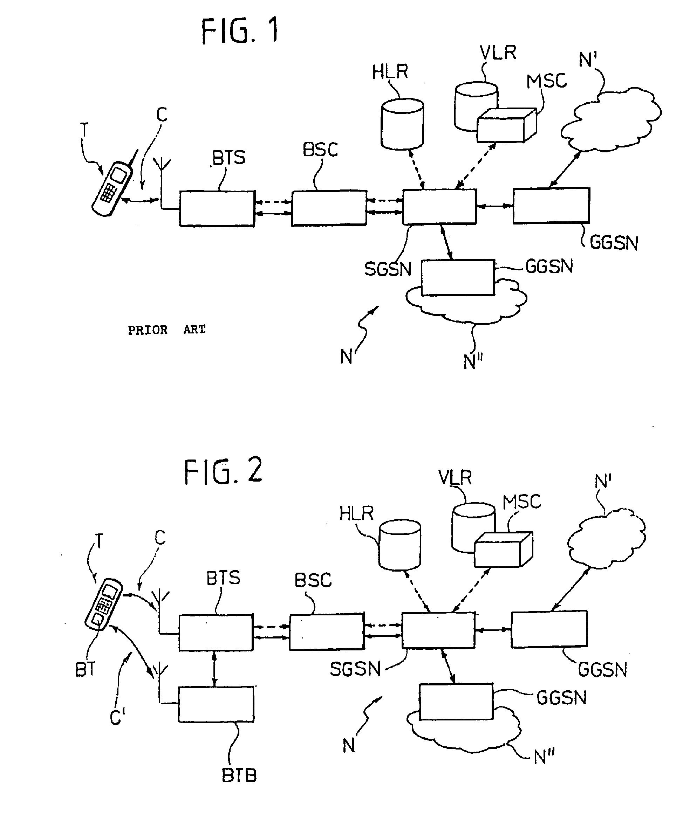

The diagram in figure 1 illustrates the typical configuration of a mobile communication network of the cellular type comprising a series of terminals T (only one of which is illustrated in the drawings for evident reasons of clarity). Each mobile terminal T can be connected to the network, generally indicated by reference N, by means of a "channel" C, comprising a series of communication channels which are made available by the base transceiver station BTS.

The specific implementation criteria of the channel C may vary according to the technology adopted in the context of the network N. This occurs according to criteria that are well known in the art and, for this reason, do not need to be specifically described herein. This also considering that the solution according to the invention is transparent with respect to the specific implementation characteristics of the network N to which the solution according to the invention is associated.

Proceeding with the illustration of the network chart in figure 1, reference BSC indicates the set of functions which supervise radio resource management, while reference SGSN indicates the set of functions pertaining to mobility management, authentication, encrypting and routing, implemented in a coordinated manner with the HLR (Home Location Register), the VLR (Visitor Location Register) and the MSC (Mobile services Switching Center) modules.

References GGSN indicate the respective sets of resources that supervise gateway, mobility management, routing and encapsulation functions. This all in relation, for example, with an external data network N' or with other PLMN type public networks, generally indicated with reference N".

As previously mentioned, the structural and operational characteristics of the elements described above are entirely known in the art and, consequently, do not require a detailed description herein, also because they are not relevant for understanding this invention.

The configuration characteristics of the communication lines/channels intended to permit the interactions between the various modules/functions considered above are also concerned. With reference to this, it is noted that in both of the charts in figures 1 and 2, said lines/channels are represented by two-directional arrows. Particularly solid lines indicate the lines intended to transfer user data and dotted lines indicate the lines intended to permit the transfer of signals.

The salient characteristics of the solution according to the invention are shown in figure 2. The same references that appear in figure 1 are used to indicate identical or equivalent components/functions.

Essentially, the solution according to the invention integrates the set of communication channels C provided for communication between the base transceiver station BTS and the mobile terminals T connected at the time to the base transceiver station BTS with an additional connection channel C' implementing Bluetooth technology; all this using, on the one side, a communication module BT (a chip of the type known *per se),* which may be installed in each mobile terminal T, and on the other side a Bluetooth interface BTB associated to the base transceiver station BTS.

Essentially, a mobile terminal T equipped with a corresponding Bluetooth BT module can connect to the access point of the network N defined by the base transceiver station BTS in either of the following ways:
- by using the set of channels C normally available in the context of the network N,
- by exploiting a Bluetooth communication channel C (in general in the context of cell whose dimensions are smaller than the network cell defined by the set of channels C).

This offers the consequent possibility of deviating the traffic (and the respective bandwidth engagement) to the Bluetooth module BT contained in the mobile terminal T, permitting to establish a connection with the Bluetooth interface BTB in the base transceiver station BTS.

This solution can be implemented in small environments (eg. shopping centres, airports, railway stations, bus stops, underground train stations, etc.) where the maximum distance envisaged for Bluetooth connections (approximately 100 m circa) is certainly sufficient.

It will be appreciated once again that the use of such a solution is entirely independent (i.e. "transparent") with respect to the specific characteristics of the network N, which may be GSM, GPRS or UMTS, it being understood that the system management equipment (e.g. the MSC module) must be configured to be "informed" of the existence - as concerns the available resources - also of the Bluetooth channels.

The solution according to the invention also exploits the possibility of local traffic management offered by Bluetooth logic. This is because the master unit (usually identified by the Bluetooth interface BTB of the base transceiver station BTS) is capable of managing the traffic of eight units - i.e. eight terminals T - active at the same time holding up to 256 units in stand-by until a slot in the respective piconet is freed.

In this way - on main cellular network N level - the possibilities of local user management offered by the control logic already implemented in Bluetooth devices can be exploited automatically and stand-by management can be established. This possibility has not been envisaged for traditional cellular networks in which, if the system is saturated (i.e. if the set of channels C is entirely engaged), the possibility of communicating will be absolutely precluded to any new mobile terminal T attempting to connect to the network (either to make or receive a call).

The only requirement is that each mobile terminal T must be at a sufficiently short distance - i.e. within the range of 100 m which is typical for Bluetooth technology - from the base transceiver station BTS to possibly exploit the Bluetooth network potentialities.

Except for this requirement (which - it must be stressed - is not a significant limitation in the typical situations of use herein envisaged), each active user who is connected to the network N via the piconet Bluetooth, instead of via a channel C (e.g. because all available channels are engaged at the time), anyway has an average bit-rate (downstream) not lower than 90 kbps (720/8 with asymmetric link) or approximately 54 kbps with symmetric link (433/8) at his/her disposal.

If required, the base transceiver station BTS can be configured to implement two types of charge, or tariffing; specifically a first charge level (generally higher) for the use of the typical cellular network channels C (with their higher distance range) and a second charge level (generally lower) for the possible access to the network N via the Bluetooth piconet channels C', with possible constraints related to the need of being in, and maintaining, a position which is sufficiently close to the base transceiver station BTS (or, more correctly, to the Bluetooth function via interface BTB).

The solution according to the invention - also in correspondence with places characterised by traffic requirements appearing in waves or peaks (refer to the examples listed in the preamble of this description) - permits the configuration of a cellular network N so that it can satisfy "average" traffic needs. The word "average" can be referred to time and/or to the possible geographic distribution in the context of the cell or the cells.

Each base transceiver station BTS in the network thus configured is integrated with a corresponding Bluetooth interface BTB which is capable of expanding the potentialities of communication (in the context of the corresponding Bluetooth piconet) to deal with traffic peaks deriving from users which can be located near the base transceiver station BTS, within the range of the respective Bluetooth piconet. This result is obtained by integrating the channels C of the cellular network N with the "auxiliary" channels C' of the Bluetooth piconet.

Additionally, the intrinsic flexibility of operation offered by the Bluetooth technology can be exploited, specifically as regards the possibility of implementing stand-by management, avoiding the need to absolutely reject the possibility of communication to a mobile terminal, even if all the channels C and C' are engaged at the time, offering the channels C' to the stand-by users as they are progressively unengaged by other users who have ended the communication.

It will also be appreciated that in the solution herein described, several Bluetooth interfaces BTB or functions can be installed in each base transceiver station BTS, to originate a so-called scatternet for each base transceiver station BTS. This possibility additionally increases the degree of flexibility of the system operation.

Naturally, numerous changes can be implemented to the construction and embodiments of the invention herein envisaged without departing from the scope of the present invention, as defined by the following claims.

## Claims

1. Mobile communication network (N) comprising at least one base transceiver station (BTS) configured to communicate with mobile terminals (T) connected to a corresponding coverage cell via first communication channels (C) which can be selectively activated, **characterised in that**
said base transceiver station (BTS) is integrated with at least one Bluetooth^{®} interface (BTB) which can communicate with said mobile terminals (T) via at least one second communication channel (C') of the Bluetooth type, said second communication channel (C') permitting to establish a connection between said base transceiver station (BTS) and said mobile terminals (T), if all said first communication channels (C) are already engaged in communications between mobile terminals (T) and said base transceiver station (BTS).

2. Communication network according to claim 1, **characterised in that**
said Bluetooth interface (BTB) having means to establish a communication with said mobile terminals (T) in the context of a respective Bluetooth cell, said respective Bluetooth cell being smaller in dimensions with respect to said coverage cell.

3. Communication network according to claim 1 or claim 2, **characterised in that**
said Bluetooth interface (BTB) is configured to keep said mobile terminals (T) in stand-by conditions for communicating with said base transceiver station (BTS) via at least one second Bluetooth communication channel (C'), offering communication channels (C') to stand-by users as said communication channels (C') are progressively unengaged by other users who have ended the communication.

4. Communication network according to any of the previous claims, **characterised in that** said base transceiver station (BTS) is configured to activate a double charge mechanism for the communication established between said base transceiver station (BTS) and said mobile terminals (T), with a first charge level which is used when the communication between said base transceiver station (BTS) and the respective mobile terminal (T) is established by means of one of said first communication channels (C), and a second charge level which is used when the communications between said base transceiver station (BTS) and the respective mobile terminal (T) is established by means of at least one of the second Bluetooth communication channel (C').

5. Communication network according to any of the previous claims, **characterised in that**
said base transceiver station (BTS) is integrated with a plurality of Bluetooth interfaces (BTB), said plurality of Bluetooth interfaces (BTB) for establishing a corresponding scattemet for at least one base transceiver station (BTS).

## Patentansprüche

1. Mobil-Kommunikationsnetz (N) mit zumindest einer Basis-Sende/Empfangs-Station (BTS), die zur Kommunikation mit mobilen Endgeräten (T), die mit einer entsprechenden Sendegebietszelle über erste Kommunikationskanäle (C) verbunden sind, die ausgewählt aktiviert werden können, konfiguriert ist,
**dadurch gekennzeichnet, dass**
die Basis-Sende/Empfangs-Station (BTS) in zumindest eine Bluetooth®-Schnittstelle (BTB) integriert ist, die mit den mobilen Endgeräten über zumindest einen zweiten Kommunikationskanal (C') vom Bluetooth-Typ kommunizieren kann, wobei der zweite Kommunikationskanal (C') erlaubt, eine Verbindung zwischen der Basis-Sende/Empfangs-Station (BTS) und den mobilen Endgeräten (T) einzurichten, wenn alle ersten Kommunikationskanäle (C) bereits in Kommunikationen zwischen mobilen Endgeräten (T) und der Basis-Sende/Empfangs-Station (BTS) belegt sind.

2. Kommunikationsnetz nach Anspruch 1, **dadurch gekennzeichnet, dass**
die Bluetooth-Schnittstelle (BTB) eine Einrichtung zum Einrichten einer Kommunikation mit den mobilen Endgeräten (T) im Zusammenhang einer jeweiligen Bluetooth-Zelle besitzt, wobei die jeweilige Bluetooth-Zelle im Hinblick auf die Sendegebietszelle kleinere Ausmaße besitzt.

3. Kommunikationsnetz nach Anspruch 1 oder 2, **dadurch gekennzeichnet, dass**
die Bluetooth-Schnittstelle (BTB) konfiguriert ist, die mobilen Endgeräte (T) in Bereitschaftsbedingungen zur Kommunikation mit der Basis-Sende/Empfangs-Station (BTS) über zumindest einen zweiten Bluetooth-Kommunikationskanal (C') zu halten, wobei Kommunikationskanäle (C') Bereitschafts-Nutzem angeboten werden, wenn die Kommunikationskanäle fortschreitend unbelegt durch andere Nutzer sind, die die Kommunikation beendet haben.

4. Kommunikationsnetz nach einem der vorhergehenden Ansprüche, **dadurch gekennzeichnet, dass**
die Basis-Sende/Empfangs-Station (BTS) konfiguriert ist, einen doppelten Lademechanismus für die zwischen der Basis-Sende/Empfangs-Station (BTS) und den mobilen Endgeräten eingerichtete Kommunikation zu aktiveren, mit einem ersten Ladeniveau, das verwendet wird, wenn die Kommunikation zwischen der Basis-Sende/Empfangs-Station (BTS) und dem jeweiligen mobilen Endgerät (T) mittels eines der ersten Kommunikationskanäle (C) eingerichtet ist, und einem zweiten Ladeniveau , das verwendet wird, wenn die Kommunikationen zwischen der Basis-Sende/Empfangs-Station (BTS) und dem jeweiligen mobilen Endgerät (T) mittels zumindest eines der zweiten Bluetooth-Kommunikationskanäle (C') eingerichtet ist.

5. Kommunikationsnetz nach einem der vorhergehenden Ansprüche, **dadurch gekennzeichnet, dass**
die Basis-Sende/Empfangs-Station (BTS) in eine Mehrzahl von Bluetooth-Schnittstellen (BTB) integriert ist, wobei die Mehrzahl von Bluetooth-Schnittstellen (BTB) ein entsprechendes Scatternet für zumindest eine Basis-Sende/Empfangs-Station (BTS) einzurichten.

## Revendications

1. Réseau de communication mobile (N) comprenant au moins une station émettrice réceptrice de base (BTS) configurée pour communiquer avec des terminaux mobiles (T) connectés à une cellule de couverture correspondante par l'intermédiaire de premiers canaux de communication (C) qui peuvent être sélectivement activés, **caractérisé en ce que**
ladite station émettrice réceptrice de base (BTS) est intégrée à au moins une interface Bluetooth® (BTB) qui peut communiquer avec lesdits terminaux mobiles (T) par l'intermédiaire d'au moins un second canal de communication (C') du type Bluetooth, ledit second canal de communication (C') permettant d'établir une connexion entre ladite station émettrice réceptrice de base (BTS) et lesdits terminaux mobiles (T), si tous lesdits premiers canaux de communication (C) sont déjà engagés dans des communications entre des terminaux mobiles (T) et ladite station émettrice réceptrice de base (BTS).

2. Réseau de communication selon la revendication 1,
**caractérisé en ce que**
ladite interface Bluetooth (BTB) a des moyens pour établir une communication avec lesdits terminaux mobiles (T) dans le contexte d'une cellule Bluetooth respective, ladite cellule Bluetooth respective étant de dimensions inférieures à celles de ladite cellule de couverture.

3. Réseau de communication selon la revendication 1 ou la revendication 2, **caractérisé en ce que**
ladite interface Bluetooth (BTB) est configurée pour maintenir lesdits terminaux mobiles (T) dans des conditions d'attente pour communiquer avec ladite station émettrice réceptrice de base (BTS) par l'intermédiaire d'au moins un second canal de communication Bluetooth (C'), en proposant des canaux de communication (C') à des utilisateurs en attente au fur et à mesure que lesdits canaux de communication (C') sont progressivement désengagés par d'autres utilisateurs qui ont terminé la communication.

4. Réseau de communication selon l'une quelconque des revendications précédentes, **caractérisé en ce que** ladite station émettrice réceptrice de base (BTS) est configurée pour activer un mécanisme de tarification double pour la communication établie entre ladite station émettrice réceptrice de base (BTS) et lesdits terminaux mobiles (T), avec un premier niveau de tarification qui est utilisé lorsque la communication entre ladite station émettrice réceptrice de base (BTS) et le terminal mobile respectif (T) est établie au moyen de l'un desdits premiers canaux de communication (C), et un second niveau de tarification qui est utilisé lorsque la communication entre ladite station émettrice réceptrice de base (BTS) et le terminal mobile respectif (T) est établie au moyen d'au moins l'un des seconds canaux de communication Bluetooth (C').

5. Réseau de communication selon l'une quelconque des revendications précédentes, **caractérisé en ce que** ladite station émettrice réceptrice de base (BTS) est intégrée à une pluralité d'interfaces Bluetooth (BTB), ladite pluralité d'interfaces Bluetooth (BTB) servant à établir un scatternet correspondant pour au moins une station émettrice réceptrice de base (BTS).
